# NEUE EUROPÄISCHE PATENTSCHRIFT

(11) **EP 0 287 579 B2**
(45) Veröffentlichungstag und Bekanntmachung des Hinweises auf die Entscheidung über den Einspruch: **18.06.1997**
(45) Hinweis auf die Patenterteilung: 03.06.1992
(21) Anmeldenummer: 87905599.4
(22) Anmeldetag: 02.09.1987
(51) Int. Cl.: B01D 33/62, B01D 29/80

(54) **VERFAHREN ZUM BILDEN UND ENTFEUCHTEN VON FILTERKUCHEN**
PROCESS FOR FORMING AND DEHUMIDIFYING FILTER CAKES
PROCEDE DE FORMATION ET DE DESHUMIDIFICATION DE GATEAUX DE FILTRES-PRESSES

(30) Priorität: 02.09.1986 DE 3629805
(43) Veröffentlichungstag der Anmeldung: 26.10.1988
(73) Patentinhaber: BOTT, Reinhard, D-76131 Karlsruhe (DE); KERN, Robert, D-76131 Karlsruhe (DE); LANGELOH, Thomas, D-76131 Karlsruhe (DE)
(72) Erfinder: BOTT, Reinhard, D-76131 Karlsruhe (DE); KERN, Robert, D-76131 Karlsruhe (DE); LANGELOH, Thomas, D-76131 Karlsruhe (DE)
(74) Vertreter: Weber, Otto Ernst, Dipl.-Phys.
(86) Internationale Anmeldenummer: DE8700399
(87) Internationale Veröffentlichungsnummer: WO8801531

(56) Entgegenhaltungen:
- EP-A- 55 725
- BE-A- 662 063
- DE-A- 2 153 833
- GB-A- 1 044 642
- US-A- 3 491 021
- US-A- 4 357 758
- US-A- 4 397 100
- US-A- 4 584 058
- DISSERTATION R.A. BOTT, TH KARLSRUHE "Zur kontinuierlichen Druckfiltration", Kolloquium 21.12.85, Seiten 102-111, 138-143
- Fortschr.-Ber. VDI, Reihe 3, N 114, 1986, VDI-Verlag, Düsseldorf; Dissertation H. Anlauf:"Entfeuchtung von Filterkuchen bei der Vakuum-, Druck- und Druck/Vakuum-Filtration, S. 162-169, 190-193, 202-209
- Winnacker, Küchler:"Chemische Technologie", Bd.1 "Allgemeines", 4. Auflage, München/Wien, 1984, S.235-237
- European Congress (1984,Algarve, Portugal) "Energy economics and management in industry", 1. Auflage, Pergamon Press Ltd, 1985, S. 113 - 120

## Beschreibung

Die Erfindung betrifft ein Verfahren zum Bilden uns Entfeuchten von Filterkuchen gemäß dem Oberbegriff des Anspruchs 1.

Die kuchenbildende Filtration wird z. B. beim Aufbereiten von Rohstoffen, wie Erzen, Kohle usw., bei der Abtrennung von Schlämmen und dergleichen Verfahren verwendet. Üblicherweise wird die Suspension durch Eintauchen eines Filtermediums. z. B. eines monofilen, multifilen oder eines Filtergewebes und Ablagern des Feststoffs als Filterkuchen am Filtermedium getrennt. Die Poren des Gewebes haben bisher einen weit größeren Durchmesser als der überwiegende Teil der Feststoffpartikel der Suspension, so daß zu Beginn der Ablagerung ein Feststoffdurchschlag durch das Filtermedium entsteht, der jedoch unerwünscht ist und deshalb möglichst gering gehalten werden sollte. Nach einer gewissen Anlagerungszeit von Feststoffpartikeln am Filtermedium weist der sich bildende Filterkuchen engere Poren bzw. Kapillaren als das Filtermedium auf und hält somit die weiteren feinen Feststoffteilchen zurück und wirkt selbst als Filter.

Nach dem Auftauchen aus der Suspension wird dieser Filterkuchen entfeuchtet, wobei bei der Vakuumfiltration ein Fluid, d.h. eine andere Flüssigkeit oder ein Gas, vorzugsweise Luft, durch das Haufwerk hindurchgesaugt oder bei der Druckfiltration hindurchgedrückt wird. Zuerst werden die gröbsten, einen niedrigen Eintrittskapillardruck aufweisenden Kapillaren des Filterkuchens entfeuchtet; es folgen die kleineren Kapillaren mit höherem Eintrittskapillardruck. Der Entfeuchtungsvorgang soll solange erfolgen, bis eine geforderte Restfeuchte im Kuchen erreicht ist. Während des Entfeuchtungsvorgangs der engeren Kapillaren strömt das Entfeuchtungsfluid bereits durch die entleerten größeren Kapillaren und durch das Filtermedium, so daß das Druckpotential nur mit erhöhtem Arbeitsaufwand des Druckaggregats aufrechterhalten werden kann. Der während der Entfeuchtungszeit durch den Kuchen strömende Volumenstrom des Entfeuchtungsfluids ist ein Maß für die Wirtschaftlichkeit des Filtrationsverfahrens. Insbesondere feinstkornreiche oder kompressible Filterkuchen neigen bei der Entfeuchtung zur Rißbildung. Die von der Kuchenoberfläche bis zum Filtermedium sich erstreckenden Risse bedingen einen erheblichen Entfeuchtungsfluiddurchsatz, so daß der Erhalt der Druckdifferenz zu einem extrem hohen Arbeitsaufwand und einem hohen Fluiddurchsatz führt, was äußerst unwirtschaftlich ist.

Es wurde versucht, die Rißbildung dadurch zu verhindern, daß das Filtermedium in eine Vielzahl kleiner Filterflächen unterteilt wird, zwischen denen jeweils ein relativ breiter Trennsteg angeordnet ist, so daß die im Haufwerk aufgrund der Kapillarkräfte sich bildenden Spannungen sicher bis zum jeweiligen Trennsteg übertragen und dort durch Schrumpfung des Kuchens abgebaut werden können. Diese Maßnahme hat aber den Nachteil, daß durch die Trennstege ein erheblicher Filterflächenverlust entsteht. Es wurde weiterhin versucht, den Filterkuchen über Diaphragmen zu entfeuchten, wobei als Diaphragma vorwiegend gesinterte Glas- oder Keramikfilterplatten eingesetzt wurden. Diese Filterplatten haben aber den Nachteil, daß sie aufgrund ihrer Dicke und Beschaffenheit einen so großen Durchströmungswiderstand aufweisen, daß sich eine industrielle Anwendung verbietet. Außerdem kann aufgrund des notwendig hohen Differenzdrucks nur die Druckfiltration angewendet werden, da bei der Vakuumfiltration nur Drücke von 0,8 bis 0,9 bar aufgrund des Dampfdrucks der Flüssigkeit erreichbar sind.

Bei einer Suspension mit gelösten Salzen tritt ein weiterer nachteiliger Effekt auf. Nach dem Verdrängen der Suspension aus dem Filterkuchen wird das Filtergewebe vom Entfeuchtungsfluid, das in der Regel ein Gas ist, durchströmt. Dieses Gas trocknet aber nun das Filtergewebe und kühlt es infolge der entzogenen Verdampfungsenthalpie der Suspension ab. Eine weitere Abkühlung ergibt sich gemäß dem Gaszustandsgesetz durch die Entspannung eines gasförmigen Fluids bei der Haufwerksdurchströmung. Dabei treten Auskristallisationsvorgänge der gelösten Salze auf, so daß sich das Gewebe allmählich mit den auskristallisierten Salzen zusetzt und nach kurzer Zeit keine filtrierende Wirkungen mehr zeigt.

Aus der US-A-4,397,100 ist ein Verfahren zum Entwässern von Klärschlammen bekannt, bei dem Restwasser mit einem Lösungsmittel versetzt wird, um eine leichtere Abtrennung des Wasser/Lösungsmittel-Gemisches von den organischen Feststoffen zu erreichen.

Aus der DE-A-2153 833 bzw. der GB-A-1044642 ist ein Verfahren zur Trocknung feuchter Filterkuchen mit Dampf bekannt, wobei der Dampf im Filtermedium bzw. an dessen Oberflache kondensiert.

Aus der US-A-4,357,758 geht ein Verfahren hervor, bei dem ein Entfeuchtungsgut auf eine Membran aufgebracht und auf dieser mittels eines Entfeuchtungsfluides entfeuchtet wird. Dabei dringt das Entfeuchtungsfluid in das Entfeuchtungsgut, nicht aber in die Membran ein.

Die Dissertation von R.A. Bott an der technischen Hochschule Karlsruhe: "Zur kontinuierlichen Druckfiltration," Seiten 102 bis 111 und 138 bis 143, und der VDI Forschungsbericht, Reihe 3, Nummer 114, April 1986: "Entfeuchtung von Filterkuchen bei der Vakuum-, Druck- und Druck/ Vakuum-Filtration," Seiten 162 bis 169, 190 bis 193 und 202 bis 209, befassen sich vor allem mit dem Durchsatz von Entfeuchtungsfluid durch einen auf einem Filtertuch gebildeten Filterkuchen.

In der Druckschrift "Energy Economics and Management in Industry", erste Auflage, Pergamon Press Ltd. 1985, Seiten 113 bis 120, ist ein Verfahren geschildert, bei dem Torf an eine feinporöse Keramikplatte angelagert und anschließend mittels eines Entfeuchtungsfluides entfeuchtet wird. Das Entfeuchtungsfluid dringt dabei in den Torf, nicht aber in die Keramikplatte ein. Zur Durchführung dieses bekannten Verfahrens ist eine spezielle Vorrichtung vorgesehen.

Der Erfindung liegt die Aufgabe zugrunde, das zuletzt genannte Verfahren so weiter zu bilden, daß eine Trennung eines Feststoffes von einer flüssigen Phase in noch wirtschaftlicherer Weise erreicht wird und in verschiedenartigen Filteranlagen ausgeführt werden kann.

Diese Aufgabe wird bei einem Verfahren der gattungsgemäßen Art erfindungsgemäß durch die kennzeichnenden Verfahrensschritte des Anspruchs 1 gelöst. Vorteilhafte Weiterbildungen sind Gegenstand der Unteransprüche.

Erfindungsgemäß wird ein Filtermedium mit einem für das Entfeuchtungsfluid höheren kapillaren Eintrittsdruck als der des Filterkuchens verwendet, und dem Entfeuchtungsfluid wird ein Differenz druck aufgegeben, der zumindest geringfügig größer als der kapillare Einstrittsdruck des Filterkuchens und gleich oder geringer als des kapillare Einsrittsdruck des Filtermediums ist.

Das Filtermedium weist in Abhängigkeit der jeweiligen Prozeßbedingungen, wie Porendurchmesser, Benetzbarkeit des Filtermediums durch die Suspensionsflüssigkeit, Randwinkel zwischen Filtermedium und Flüssigkeitsoperfläche, Flüssigkeitsoberflächenspannung, Temperatur usw. einen kapillaren Eintrittsdruck auf, der höher liegt als der des Filterkuchens.

Unter kapillarer Eintrittsdruck der Membran bzw. des Fiiterkuchens wird der Eintrittsdruck für das Entfeuchtungsfluid in die mit der Flüssigkeit der Suspension gefüllten Poren der Membran bzw. des Filterkuchens verstanden.

Durch Anlegen eines Differenz drucks auf das Entfeuchtungsfluid, der größer als der kapillare Eintrittsdruck des Filterkuchens aber geringer als der des Filtermediums ist, wird die Suspensionsflüssigkeit aus dem Filterkuchen durch das Filtermedium verdrängt. Dabei werden zuerst die gröbsten Kapillaren und anschließend die feineren entfeuchtet. Dieses Verfahren hat den Vorteil, daß nach dem Entfeuchten der gröbsten Kapillaren keine Durchströmung des Entfeuchtungsfluids durch das Filtermedium eintritt, da der Einstrittsdruck des Filtermediums für das Entfeuchtungsfluid zu hoch ist. Durch diesen Umstand bleibt aber die angelegte Druckdifferenz erhalten, da keine Durchtrömung des Entfeuchtungsfluids und somit keine Entspannung gegenüber dem Druck hinter dem Filtermedium auftritt.

Auch verlieren die im Filterkuchen sich bildenden Risse an Bedeutung, da das durch die Risse einbrechende Entfeuchtungsfluid lediglich bis an die Oberfläche des Fiitermediums gelangt, dieses aber nicht durchdringt, so daß das Druckpotential des Entfeuchtungsfluid erhalten bleibt und dadurch der Filterkuchen weiter entfeuchtet wird.

Auch der Auskristallisationseffekt bei Suspensionen mit gelösten Salzen spielt nunmehr keine Rolle, da das Filtermedium nur noch von der Suspension, aber nicht mehr vom Entfeuchtungsfluid durchströmt wird, so daß dieses nicht mehr die Poren des Filtermediums austrocknet bzw. abkühlt und eine Auskristallisation der gelösten Salze bewirkt, die die Poren zusetzen würden.

Zur Durchführung des Verfahrens bedient sich die Erfindung einer Vorrichtung mit einem in die Suspension eintauchenden und die Feststoffpartikel an der Oberfläche aufnehmenden Filtermedium, einem die Feststoffpartikel nach dem Auftauchen des Filtermediums aus der Suspension und nach deren Entfeuchtung vom Filtermedium abhebenden Abstreifteil und ggfls. einer das Filtermedium von festsitzenden Feststoffpartikeln befreienden Reinigungseinrichtung. Hauptsächlich werden für die kuchenbildende Filtration Scheiben-, Trommel- oder Bandfilter verwendet.

Erfindungsgemäß ist das Filtermedium der Vorrichtung als relativ dünne Membran ausgebildet. Diese Membran weist einen kapillaren Eintrittsdruck auf, der größer als der des Filterkuchens ist, so daß das Entfeuchtungsfluid bei geeignetem Druck zwar den Filterkuchen aber nicht die Membran durchdringt. Die Membran hat weiterhin den Vorteil, daß sie elastisch und von geringer Dicke, im Bereich von 0,5 mm ausgebildet ist, so daß sie z.B. bei Trommelfilter als umiaufendes Filtermedium verwendet werden kann und aufgrund der geringen Dicke wesentlich leichter zu reinigen ist wie gesinterte Glas- oder Keramikfilterplatten mit einer zehnfach größeren Dicke, die sich zudem durch die Verunreinigungen technischer Filterkuchen zusetzen.

Gemäß einem weiteren Merkmal ist der größte Porendurchmesser der Membran gleich oder kleiner dem kleinsten Durchmesser der Feststoffpartikel des Filterkuchens. Dies hat den Vorteil, daß beim Aufbau des Filterkuchens in der Suspension kein Feststoffdurchschlag auftritt, wodurch die Filtrationsgüte wesentlich verbessert wird. Die Membran kann auch so ausgebildet sein, daß der überwiegende Teil der Poren einen kleineren Durchmesser als die Feststoffpartikel des Filterkuchens aufweisen. Dadurch wird vorteilhaft der Durchströmungswiderstand verringert, wobei ein nur unbedeutender Feststoffdurchschlag entsteht.

Vorteilhaft weist die Membran eine gegenüber dem Filterkuchens näherungsweise zwei Zehnerpotenzen geringere Dicke auf. Aufgrund der Fluiddurchlässigkeit der Membran kann diese Filterkuchen in jeder gewünschten Dicke und ungeachtet der damit verbundenen steigenden Kuchenrißanfälligkeit aufnehmen.

Zur Unterstützung der Absperrwirkung gegen ein Durchströmen des Fluids durch die Membran kann diese abhängig von den Eigenschaften der Suspension eine hydrophile bzw. hydrophobe Oberfläche aufweisen. Dies hat zudem den Vorteil, daß der Durchströmungswiderstand für die Suspensionsflüssigkeit verringert und ein Anbacken des filtrierten Feststoffs, d.h. des Filterkuchens, verhindert wird.

Gegenüber herkömmlichen Filtergeweben mit einer dem Gewebe eigenen Struktur der Oberflächen kann die Membran dadurch dem Prozeß oder dem Produkt besser angepaßt werden, daß die Oberfläche z. B. glatt, rauh, strukturiert, homogen oder dergleichen ausgebildet ist. Weiterhin ist die Oberfläche der Membran vorteilhafterweise gegen Säuren und/oder Basen chemisch resistent ausgebildet. Sie kann außerdem, z-B. um sie auf eine bestimmte Filterfläche aufziehen zu können, jede gewünschte Form annehmen, d.h. flexibel oder dehnbar sein oder eben, gebogen, gewölbt oder dergleichen ausgebildet sein und ist beiiebig konfektionierbar.

Wesentliches Kennzeichen der erfindungsgemäß verwendeten Vorrichtung ist, daß die geforderte mechanische Stabilität der Membran dadurch noch erhöht wird, daß sie auf Filtergewebe mit wesentlich größeren Poren aufgebracht wird bzw. daß die Membran zwischen zwei oder mehreren Filtergeweben mit wesentlich größeren Poren in Sandwich-Form eingelagert ist. Diese Filtergewebe können herkömmliche Filtergewebe sein, die die mechanischen Belastungen, wie Zug, Druck, Scherung usw. aufnehmen und die Membran schonen.

Eine Einsparung des Filtermediums kann vorteilhaft dadurch erreicht werden, daß die Membran nur an den filtrierenden Stellen des Filters auf Filtergewebe aufgebracht bzw. zwischen Filtergeweben eingelagert ist.

Eine hohe Belastbarkeit und Flexibilität sowie Abriebfestigkeit der Membran wird dadurch erreicht, daß sie aus einem synthetischen Werkstoff, wie Celluloseacetat, Kunststoff wie Polyamid, Polysulfone oder dergleichen gefertigt ist.

Eine einfache und wirkungsvolle Reinigung der Membran nach dem Abheben des Filterkuchens wird dadurch erreicht, daß die Reinigungseinrichtung des Filters als Ultraschallbad, gegebenenfalls mit einem fokussierten Ultraschallstrahl, eine Dampf- bzw. Druckwassersprühanlage, einer Sauganlage oder dergleichen ausgebildet ist. Es kann zum Entfernen von festsitzenden Feststoffpartikeln und Fremdkörpern auch ein Lösungsbad oder dergleichen verwendet werden.

Weitere Einzelheiten und Vorteile der Erfindung ergeben sich aus der nachfolgenden Beschreibung, mit der auf ein in der Zeichnung dargestelltes bevorzugtes Ausführungsbeispiel Bezug genommen wird. Dabei zeigen:
Fig. 1 eine schematische Darstellung eines herkömmlichen Filtergewebes mit einem sich bildenden Filterkuchen;
Fig. 2 eine schematische Darstellung eines Filterkuchens auf einer Membran;
Fig. 3 ein Diagramm den Verlauf des Eintrittsdrucks entsprechend der in Fig. 2 gezeigten Kapillaren darstellend;
Fig. 4 einen herkömmlichen Trommelfilter;
Fig. 5 eine Reinigungseinrichtung eines Filters;
Fig. 6 eine schematische Membrananordnung in Sandwich-Form.

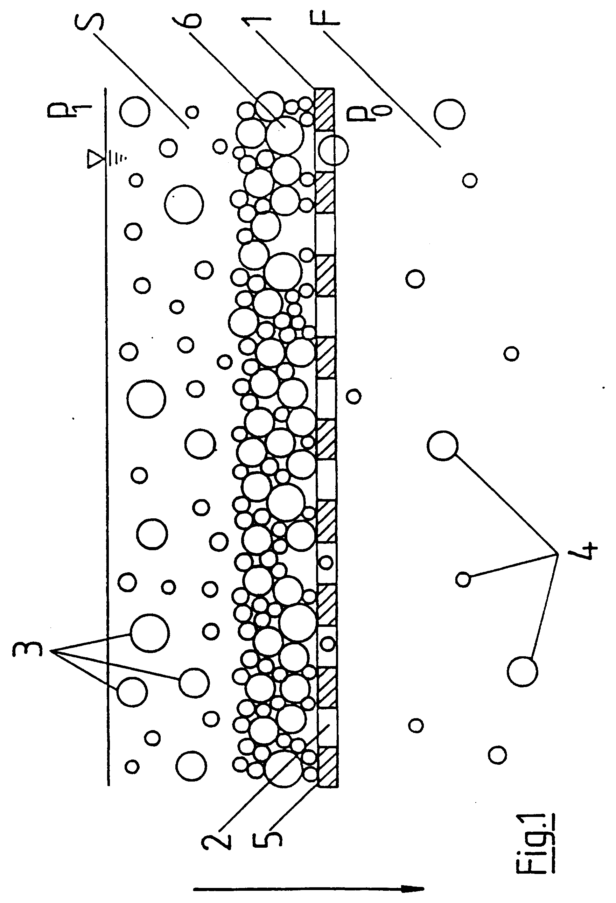

Figur 1 zeigt ein in einer Suspension S sich befindendes herkömmliches Filtergewebe 1 mit Poren 2 und in der Suspensionsflüssigkeit schwebende Feststoffpartikel 3. Der Suspension S ist ein Druck p₁ aufgeprägt, der größer ist als der hinter dem Filtergewebe 2 herrschende Druck p₀, so daß die Suspension S und mit ihr die Feststoffpartikel 3 in Richtung des Filtergewebes 1 strömen. Nach einem durch die großen Durchmesser der Poren 2 gegenüber der Feststoffpartikel 3 bedingten anfänglichen Feststoffdurchschlag 4 in das hinter dem herkömmlichen Filtergewebe 1 sich befindende Filtrat F, bildet sich auf der suspensionsseitigen Oberfläche 5 des Filtergewebes 1, ein poröser Filterkuchen 6.

Die Feststoffpartikel bilden Kapillaren 7, die mit Suspensionsflüssigkeit gefüllt sind. Nach dem Auftauchen des Filterkuchens aus der Suspension S kann der Filterkuchen 6 bei zu großen Spannungskräften, hervorgerufen durch eine Entfeuchtung der Poren und den dabei entstehenden Kapillarkräften, unter Bildung eines von der Oberfläche 8 des Kuchens 6 bis zur suspensionsseitigen Oberfläche 5 des Filtermediums durchgehenden Risses 9 einreißen. Durch diesen Riß fließt im Fall dieses grobporigen Filtermediums das Entfeuchtungsfluid nahezu ungehindert ab,wodurch die durch die Drücke P₁ und P₀ gebildete Druckdifferenz zusammenbricht.

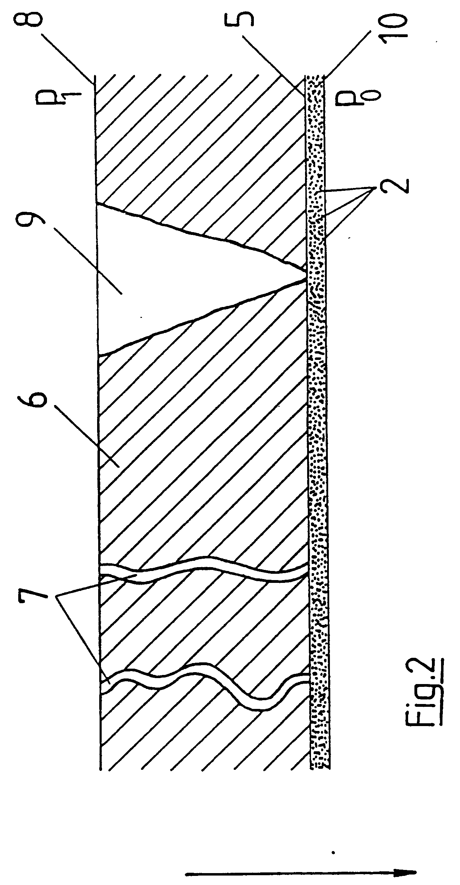

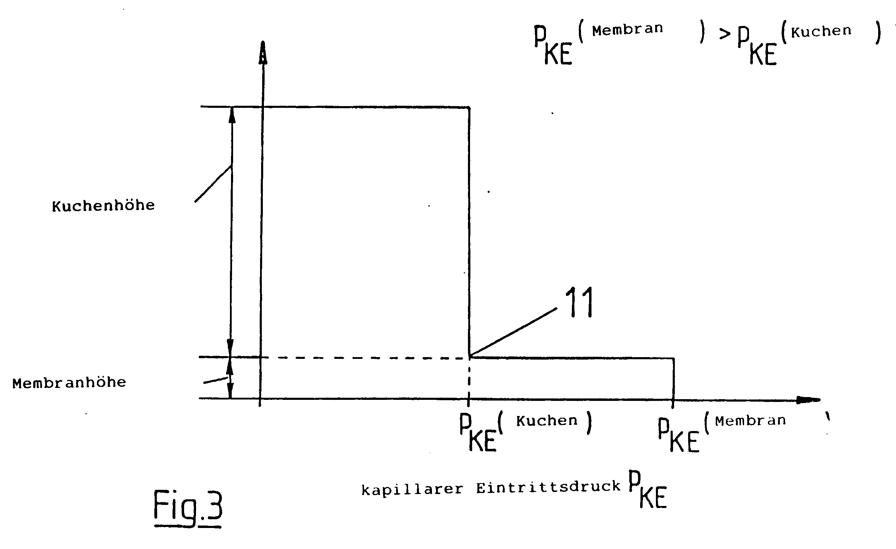

Dies wird durch die erfindungsgemäße Ausbildung des Filtermediums als Membran 10, die in Fig. 2 gezeigt ist, dadurch verhindert, daß die Membran 10 mit Poren 2 versehen ist, deren Durchmesser kleiner sind als die der Kapillaren 7 des Filterkuchens 6, so daß an der suspensionsseitigen Oberfläche 5 ein größerer kapillarer Eintrittsdruck - bedingt durch den geringeren Durchmesser der Poren des Filtermediums - für das Entfeuchtungsfluid, z. B. Gas oder dergleichen herrscht, als beim Filterkuchen 6, so daß durch die Druckdifferenz der Drücke p₁ und p₀ die Suspensionsflüssigkeit durch die Poren 2 entweichen kann, das Entfeuchtungsfluid aber zurückgehalten wird und dadurch der Druckunterschied der Drücke p₁ und p₀ aufrechterhalten bleibt. Figur 3 zeigt für die erfindungsgemäße Ausbildung des Filtermediums als Membran 10 schematisch die Größe des über der vertikalen Achse aufgetragenen kapillaren Eintrittsdrucks über die Dicke des Filterkuchens 6 und der Membran 10. Bei 11 ist ein deutlicher Anstieg des Eintrittsdrucks aufgrund der kleineren Poren 2 der Membran erkennbar.

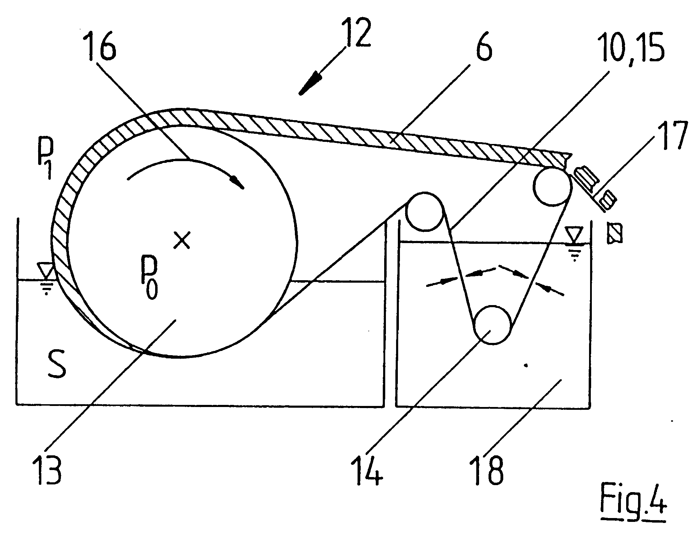

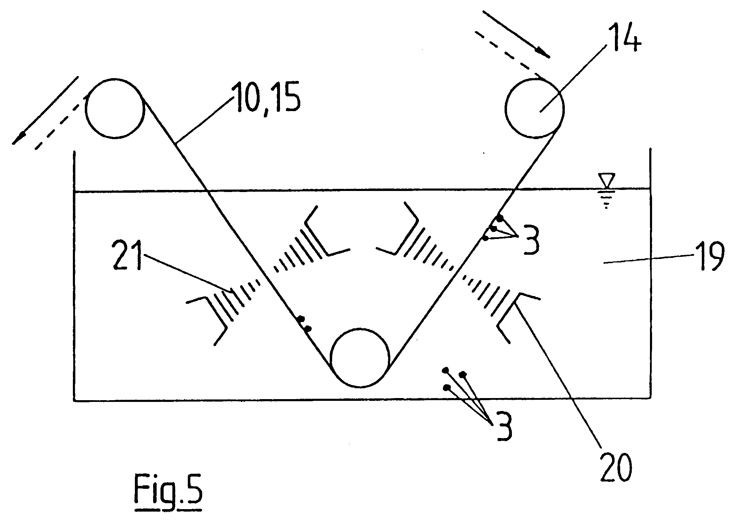

In Fig. 4 ist beispielhaft eine Ausführung eines herkömmlichen Trommelfilters 12 mit ablaufendem Filtertuch dargestellt. Diese Ausführung weist eine in der Suspension S umlaufende Trommel 13 auf. Das Filterband 16, das aus der erfindungsgemäßen Membran 10 ausgebildet ist, läuft über diese weiter und über Umlenkrollen 14. In Laufrichtung 16 im Anschluß an die Tronmel 13 passiert die Membran 10 ein den entfeuchteten Filterkuchen 6 abstreifendes Abstreifteil 17, z.B. eine Klinge, und wird dann über die Umlenkrollen 14 in eine Reinigungseinrichtung 18 umgelenkt. Die Reinigungseinichtung 18 besteht gemäß Fig. 5 hier aus einem Reinigungsbad 19 und Ultraschallsendern 20, deren ggfls. fokussierter Ultraschallsrahl 21 auf der Membran 10 festsitzende Feststoffpartikel 3 ablöst. Vorteilhaft ist auf jeder Seite der Membran 10 wenigstens ein Ultraschallsender vorgesehen.

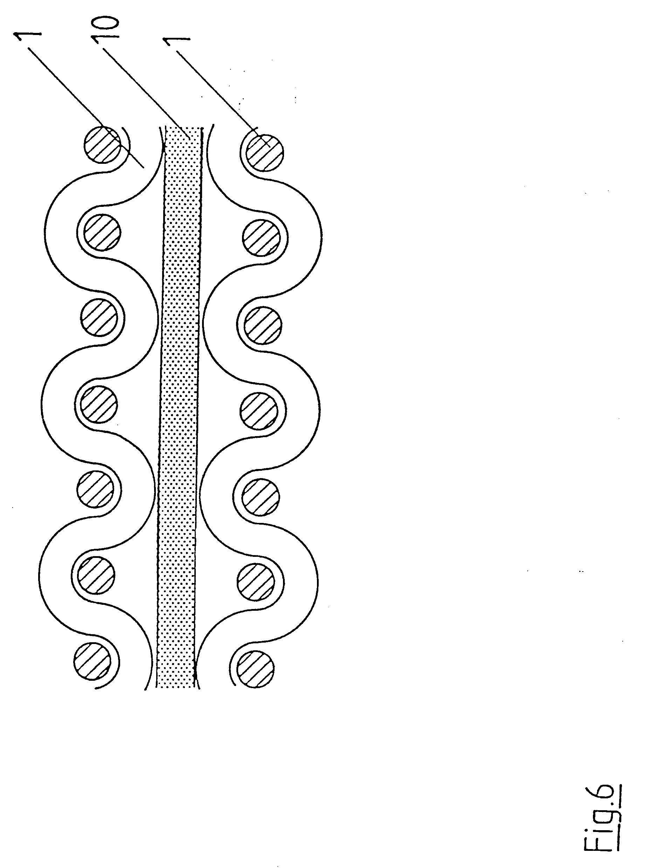

Zur Erhöhung der mechanischen Stabilität und Verringerung der Beanspruchung auf Zug, Druck, Scherung usw. ist die Membran 10 zwischen wenigstens zwei großporigen Filtergeweben in Sandwich-Form , z.B. mittels eines geeigneten Klebstoffes eingebettet (Fig. 6).

## Patentansprüche

1. Verfahren zum Bilden und Entfeuchten eines porösen, aus einzelnen Feststoffpartikeln bestehenden Filterkuchens (6),
a) bei dem der Filterkuchen (6) auf einem in eine Suspension eingetauchten Filtermedium entsteht,
b) anschließend mittels eines auf den Filterkuchen (6) wirkenden Entfeuchtungsfluids, das einen Differenzdruck zu dem hinter dem Filtermedium sich befindenden Filtrat aufweist, entfeuchtet wird, und
c) der Filterkuchen (6) nach der Entfeuchtung durch ein Abstreifteil (17) vom Filtermedium abgehoben wird,
dadurch **gekennzeichnet**,
d) daß als Filtermedium eine Membran (10) verwendet wird,
d1) die einen für das Entfeuchtungsfluid höheren kapillaren Eintrittsdruck als der des Filterkuchens (6) aufweist und
d2) die zwischen zwei großporigen Filtergeweben (1) in Sandwich-Form eingelagert ist,
e) daß die Feststoffpartikeln aus der Suspension an die Membran (10) zu dem Filterkuchen (6) anfiltriert werden,
f) daß die Entfeuchtung des Filterkuchens (6) anschließend auf der Membran (10) durchgeführt wird, und
g) daß der Differenzdruck derart eingestellt wird, daß er zumindest geringfügig größer als der kapillare Eintrittsdruck in dem Filterkuchen (6) und gleich oder geringer als der kapillare Eintrittsdruck in der Membran (10) ist, wobei kein oder ein nur unwesentlicher Durchgang von Entfeuchtungsfluid durch die Membran (10) auftritt.

2. Verfahren nach Anspruch 1,
dadurch **gekennzeichnet**,
daß der größte Porendurchmesser der verwendeten Membran (10) gleich oder kleiner dem kleinsten Durchmesser der Poren des Filterkuchens (6) ist.

3. Verfahren nach Anspruch 1 oder 2,
dadurch **gekennzeichnet**,
daß der überwiegende Teil der Poren (2) der verwendeten Membran (10) einen Durchmesser aufweist, der kleiner ist als der Durchmesser der Feststoffpartikel des Filterkuchens (6).

4. Verfahren nach einem der Ansprüche 1 bis 3
dadurch **gekennzeichnet**,
daß die verwendete Membran (10) eine gegenüber dem Filterkuchen (6) zwei Zehnerpotenzen geringere Dicke aufweist.

5. Verfahren nach einem der Ansprüche 1 bis 4,
dadurch **gekennzeichnet**,
daß die verwendete Membran (10) eine hydrophile Oberfläche (5) aufweist.

6. Verfahren nach einem der Ansprüche 1 bis 4,
dadurch **gekennzeichnet**,
daß die verwendete Membran (10) eine hydrophobe Oberfläche (5) aufweist.

7. Verfahren nach einem der Ansprüche 1 bis 6,
dadurch **gekennzeichnet**,
daß die Oberfläche (5) der verwendeten Membran (10) gegen Säuren und Basen chemisch resistent ausgebildet ist.

8. Verfahren nach Anspruch 1 bis 7,
dadurch **gekennzeichnet**,
daß die verwendete Membran (10) nur an den filtrierenden Flächen eines Filters zwischen dem Filtergewebe (1) eingelagert wird.

9. Verfahren nach einem der Ansprüche 1 bis 8,
dadurch **gekennzeichnet**,
daß die verwendete Membran (10) aus einem synthetischen Werkstoff, wie Celluloseacetat, Kunststoff, wie Polyamid oder Polysulfon gefertigt ist.

10. Verfahren nach einem der Ansprüche 1 bis 9,
dadurch **gekennzeichnet**,
daß es in einer Trommelfilteranlage (12) mit einem ablaufenden Tuch (15) durchgeführt wird, welches ganzflächig mit der Membran (10) versehen wird.

11. Verfahren nach Anspruch 10,
dadurch **gekennzeichnet**,
daß die Reinigungseinrichtung (18) als Ultraschallbad (19), gegebenenfalls mit einem fokussierten Ultraschallstrahl (21), einer Dampf- bzw. Druckwassersprühanlage oder einer Sauganlage ausgebildet ist.

## Claims

1. Process for forming and drying a porous filter cake (6) consisting of single, solid particles, wherein
a) the filter cake (6) is formed on a filter medium immersed in a suspension,
b) subsequently drying takes place by means of a drying fluid acting on the filter cake (6) and which has a pressure difference compared with the filtrate located behind the filter medium and
c) after drying the filter cake (6) is removed from the filter medium by a stripping part (17),
characterized in that
d) a membrane (10) is used as the filter medium,
d1) which has a higher capillary intake pressure for the drying fluid than that of the filter cake (6) and
d2) which is placed in sandwich form between two large-pore filter cloths (1),
e) the solid particles from the suspension at the membrane (10) are filtered to the filter cake (6),
f) the drying of the filter cake (6) then takes place on the membrane (10) and
g) the pressure difference is adjusted in such a way that it is at least slightly higher than the capillary intake pressure in the filter cake (6) and the same or lower than the capillary intake pressure in the membrane (10), there being no or only an insignificant passage of drying fluid through the membrane (10).

2. Process according to claim 1, characterized in that the largest pore diameter of the membrane (10) used is equal to or smaller than the smallest diameter of the pores of the filter cake (6).

3. Process according to claim 1 or 2, characterized in that most of the pores (2) of the membrane (10) used have a diameter smaller than the diameter of the solid particles of the filter cake (6).

4. Process according to one of the claims 1 to 3, characterized in that the membrane (10) used has a thickness smaller by two decimal powers than the filter cake (6).

5. Process according to one of the claims 1 to 4, characterized in that the membrane (10) used has a hydrophilic surface.

6. Process according to one of the claims 1 to 4, characterized in that the membrane (10) used has a hydrophobic surface.

7. Process according to one of the claims 1 to 6, characterized in that the surface (5) of the membrane (10) used is made chemically resistant to acids and bases.

8. Process according to one of the claims 1 to 7, characterized in that the membrane (10) used is only placed on the filtering surfaces of a filter between the filter cloth (1).

9. Process according to one of the claims 1 to 8, characterized in that the membrane (10) used is made from a synthetic material, such as cellulose acetate, plastics, such as polyamide or polysulphone.

10. Process according to one of the claims 1 to 9, characterized in that it is performed in a drum filter means (10) with a draining cloth (15), which is provided with the membrane (10) over its entire surface.

11. Process according to claim 10, characterized in that the cleaning device (18) is constructed as an ultrasonic bath (19), optionally with a focussed ultrasonic beam (21), a steam or pressure water spraying plant or a suction plant.

## Revendications

1. Procédé pour former et déshumidifier un gâteau de filtre (6) poreux composé de particules séparées de matière solide,
a) dans lequel le gâteau de filtre (6) se forme sur un élément filtrant immergé dans une suspension,
b) ensuite il est déshumidifié au moyen d'un fluide de déshumidification agissant sur le gâteau de filtre (6), et qui présente une différence de pression par rapport au filtrat se trouvant derrière l'élément de filtre, et
c) le gâteau de filtre (6) après la déshumidification est enlevé de l'élément de filtre à l'aide d'une pièce de raclage (17),
caractérisé en ce qu'
d) on utilise comme élément de filtre une membrane (10),
d₁) qui comporte une pression d'entrée capillaire pour le fluide de déshumidification, plus élevée que celle du gâteau de filtre (6), et
d₂) qui est insérée entre deux tissus de filtre (1) à grand-pores sous forme de sandwich,
e) les particules de matière solide sont filtrées de la suspension sur la membrane (10) et formées en un gâteau de filtre (6),
f) la déshumidification du gâteau de filtre (6) est réalisée ensuite sur la membrane (10), et
g) la pression différentielle est réglée, pour qu'elle soit au moins légèrement supérieuré à la pression d'entrée capillaire dans le gâteau de filtre (6) et qu'elle soit égale ou inférieure à la pression d'entrée capillaire dans la membrane (10), de sorte qu'il n'y ait pas de passage ou seulement un passage négligeable de fluide de déshumidification à travers la membrane (10).

2. Procédé selon la revendication 1,
caractérisé en ce que
le plus grand diamètre des pores de la membrane (10) utilisée est également ou inférieur au plus petit diamètre des pores du gâteau de filtre (6).

3. Procédé selon la revendication 1 ou 2,
caractérisé en ce que
la plus grande partie des pores (2) de la membrane (10) utilisée a un diamètre inférieur au diamètre des particules de matière solide du gâteau de filtre (6).

4. Procédé selon l'une des revendications 1 à 3,
caractérisé en ce que
la membrane (10) utilisée présente une épaisseur inférieure à celle du gâteau de filtre (6) correspondant à deux puissance de dix.

5. Procédé selon l'une des revendications 1 à 4,
caractérisé en ce que
la membrane (10) utilisée présente une surface supérieure (5) hydrophile.

6. Procédé selon l'une des revendications 1 à 4,
caractérisé en ce que
la membrane (10) utilisée présente une surface supérieure (5) hydrophobe.

7. Procédé selon l'une des revendications 1 à 6,
caractérisé en ce que
la surface supérieure (5) de la membrane (10) utilisée résiste aux attaques chimiques des bases et acides.

8. Procédé selon les revendications 1 à 7,
caractérisé en ce que
la membrane (10) utilisée n'est appliquée que sur les surfaces filtrantes d'un filtre entre les tissus de filtre (1).

9. Procédé selon l'une des revendications 1 à 8,
caractérisé en ce que
la membrane (10) utilisée est en une matière synthétique telle que de l'acétate de cellulose, une matière plastique telle qu'une polyamide, du polysulfone.

10. Procédé selon l'une des revendications 1 à 9,
caractérisé en ce qu'
il est mis en oeuvre dans une installation de filtre-tambour (12) avec une toile (15) en circulation et qui porte, sur toute sa surface, la membrane (10).

11. Procédé selon la revendication 10,
caractérisé en ce que
l'installation de nettoyage (18) est un bain à ultrasons (19), le cas échéant, avec un faisceau d'ultrasons focalisé (21), une installation de pulvérisation de vapeur ou d'eau comprimée, une installation d'aspiration.
